# EUROPEAN PATENT SPECIFICATION

(11) **EP 3 491 730 B1**
(45) Date of publication and mention of the grant of the patent: **02.09.2020**
(21) Application number: 16744412.4
(22) Date of filing: 28.07.2016
(51) Int. Cl.: H02M 1/00, H02M 7/483, H02M 1/32, H02M 1/34

(54) **HEAT BALANCING IN A POWER CONVERTER**
WÄRMEAUSGLEICH BEI EINEM LEISTUNGSWANDLER
ÉQUILIBRAGE THERMIQUE DANS UN CONVERTISSEUR DE PUISSANCE

(43) Date of publication of application: 05.06.2019
(73) Proprietor: ABB Schweiz AG, 5400 Baden (CH)
(72) Inventor: HEROLD, Simon, 8910 Affoltern am Albis (CH)
(74) Representative: Kransell & Wennborg KB
(86) International application number: PCT/EP2016/067969
(87) International publication number: WO 2018/019376

(56) References cited:
- EP-A1- 2 528 222
- WO-A1-2016/023572
- CN-A- 103 576 561
- CN-A- 104 993 715

## Description

### TECHNICAL FIELD

The present disclosure relates to a method for heat balancing of a multilevel power converter.

### BACKGROUND

A Modular Multilevel Converter (MMC), also known as Chain-Link Converter (CLC), comprises converter branches, e.g. phase legs, each with a plurality of e.g. ten to forty converter cells, or converter sub-modules, connected in series, wherein the converter branches in turn may be arranged in a wye/star, delta, direct and/or indirect converter topology. A converter cell is either a bipolar cell with a full-bridge (H-bridge) circuit or a unipolar cell with a half-bridge circuit, and comprises a capacitor for storing energy and power semiconductor switches such as insulated gate bipolar transistor (IGBT) devices, integrated gate-commutated thyristor (IGCT) devices, gate-turn-off thyristor (GTO) devices, or MOSFETs for connecting the capacitor to the converter branch with one or two polarities. The voltage per converter cell capacitor may be e.g. between 1 kV and 6 kV, whereby the voltage of a converter branch may be in a range from 10 kV to several 100 kV. An MMC controller with a processor and corresponding software, and/or with a Field Programmable Gate Array (FPGA), is responsible for controlling the converter cells and operating the power semiconductor switches by means of a dedicated (pulse-width) modulation (PWM) scheme.

MMCs may be used in electric power transmission systems as Alternating Current (AC)-only Static VAR Compensators (Statcoms) and/or Flexible AC Transmission Systems (FACTS) devices for static power-factor correction and/or Rail Interties, as well as for voltage quality and stability purposes.

There are losses in the form of heat generation in the cells of the MMC, both conduction losses and switching losses. These losses may heat the semiconductor switches and reduce their capacity and increase wear thereof. The loss distribution among the semiconductors in each cell of a modular multi-level converter depends on the converter topology, the applied modulation algorithm and the operating conditions of the converter. Generally, the semiconductor losses are not distributed evenly between the cells nor between the individual semiconductor switches within each cell. This implies that hot spots will limit the total converter performance while some switching devices are not operated at their respective limits.

WO2016/023572A1 discloses a method of controlling the switching of a multilevel converter.

### SUMMARY

It is an objective of the present invention to provide an improved heat balancing between semiconductor switching devices in each respective cell of an MMC.

In accordance with the present invention, a loss and temperature model for each semiconductor switching device in a cell calculates an estimated temperature of said semiconductor switching device. Whenever the modulator of the central MMC controller requests a zero output voltage state of a full-bridge cell, the local cell controller selects, in accordance with the model, either the upper or the lower zero output voltage switching state of the cell, depending on which of those two states improves the distribution of heat among the semiconductor switches. This method helps to balance the semiconductor switch temperatures of the semiconductor switches within one cell. The method is not concerned with temperature balancing between different cells.

According to an aspect of the present invention, there is provided a method for heat balancing performed in a full-bridge cell of a phase leg of an MMC. The method comprises obtaining real-time measurements of parameters of the cell. The method also comprises, based on the obtained measurements and by means of a predetermined mathematical model, estimating real-time heat losses at each semiconductor switching device of the full-bridge. The method also comprises, based on the estimated losses, selecting one of a first and a second zero output voltage switching states for balancing heat between the switching devices, when a modulator of the MMC requests a zero output voltage of the cell.

According to another aspect of the present invention, there is provided a computer program product comprising executable components for causing a cell controller to perform an embodiment of the method of the present disclosure when the executable components are executed by processor circuitry comprised in the cell controller.

According to another aspect of the present invention, there is provided a cell for a phase leg of an MMC. The cell comprises four semiconductor switching device in a full-bridge topology of the cell, and a cell controller comprising processor circuitry and storage storing instructions (e.g. in the form of a computer program) executable by said processor circuitry whereby said cell controller is operative to obtain real-time measurements of parameters of the cell. The cell controller is also operative to, based on the obtained measurements and by means of a predetermined mathematical model, estimate real-time heat losses at each of the semiconductor switching device. The cell controller is also operative to, based on the estimated losses, select one of a first and a second zero output voltage switching states for balancing heat between the switching devices, when a modulator of the MMC requests a zero output voltage of the cell.

According to another aspect of the present invention, there is provided a phase leg comprising a plurality of series connected cells of the present disclosure.

According to another aspect of the present invention, there is provided an MMC comprising a plurality of phase legs of the present disclosure.

By selecting the zero output voltage switching state based on estimated heat losses, and thus estimated temperature, at each switching device of the full-bridge, the heat may be balanced between the switching devices, without interrupting the regular operation of the cell or the converter, thus improving the capacity of the cell as a whole. It may not be possible or convenient to measure the actual temperatures of the switching devices, why a mathematical model, e.g. based on measured electrical current at the Alternating Current (AC) terminal of the cell and/or on measured voltage at the Direct Current (DC) link of the cell as in-data, is used. Also, the model may be faster in estimating the temperature of the switching devices than using temperature sensors at each switching device.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic circuit diagram of an embodiment of an MMC in delta configuration, in accordance with the present invention.
Fig 2 is a schematic circuit diagram of an embodiment of a cell of an MMC, in accordance with the present invention.
Fig 3 is a schematic flow chart of embodiments of a method of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

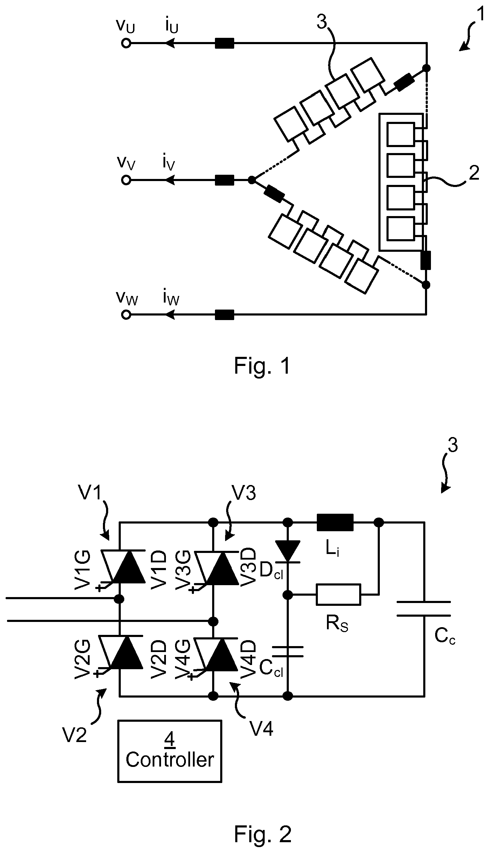

Figure 1 schematically illustrates an embodiment of a three-phase MMC 1. The MMC 1 comprises three phase legs 2, one per phase, connected in delta configuration. The MMC 1 is connectable to an electrical power grid (not shown) via at least one circuit breaker (not shown). The circuit breaker may comprise a sub-breaker for each phase. Each phase has a respective voltage (V) and current (i) as indicated in the figure. Each phase leg 2 comprises a plurality of series connected cells 3 (could alternatively be called submodules). The present invention is not limited to converters in delta configuration. In some embodiments, the converter may e.g. be in a wye (Y) configuration. Also, the converter may have any number of phase legs and/or arms, e.g. a single phase system, and is not limited to a three-phase system.

Figure 2 schematically illustrates an embodiment of a full-bridge (bipolar) cell 3. The cell comprises an energy storage C_{c}, typically a capacitor, and a plurality of semiconductor switching devices V₁-V₄ (e.g. IGCTs) forming two parallel legs of the full-bridge of the cell. Each of the semiconductor switching devices may typically be or comprise an IGCT, but may alternatively be or comprise e.g. a GTO or IGBT. When the cell charge or DC voltage or the like is discussed herein, it is the state of the energy storage which is intended. Each semiconductor switching device V₁-V₄ comprises a gate controlled semiconductor switch (e.g. an IGCT) V1G, V2G, V3G & V4G as well as an anti-parallel blocking device (e.g. a diode) V1D, V2D, V3D & V4D.

The cell 3 comprises a cell controller 4 configured to control the cell, e.g. by performing the method of the present disclosure and/or by sending firing pulses to the semiconductor switches V1G, V2G, V3G and/or V4G for opening or closing the same (i.e. blocking or conducting). The cell controller 4 may e.g. comprise a data storage storing a computer program which may be executed on processor circuitry comprised in the cell controller for enabling the cell controller to perform an embodiment of the method of the present disclosure.

Optionally, the cell 3 may comprise a clamp circuit, for limiting the di/dt in the diodes when (typically) IGCTs are turned on, e.g. comprising a clamp diode D_{cl}, a clamp capacitor C_{cl} a resistance Rₛ and a reactor Lᵢ. A clamp circuit is often used for IGCT and GTO converters, but usually not for IGBT converters.

Each cell 3 can have basically four states: pulse block, plus, minus and zero state.
- Pulse block state means that the current, independent of sign (flowing in or out of the submodule), will charge the cell.
- Zero (output voltage) state means that the cell DC voltage does not change other than by slow discharging of the capacitor due to energy taken for control of the cell.
- Plus state with current flowing into the cell means that the cell DC voltage is increasing.
- Plus state with current flowing out of the cell means that the cell DC voltage is decreasing.
- Minus state with current flowing into the cell means that the cell DC voltage is decreasing.
- Minus state with current flowing out of the cell means that the cell DC voltage is increasing.

In accordance with the present invention, either of two different (first/upper or second/lower) zero output voltage switching states may be chosen when the cell 3 is to be in zero state, e.g. if the modulator of the converter 1 requests zero output voltage from the cell. In the upper zero output voltage state, V1G and V3G are conducting while V2G and V4G are blocking. In the lower zero output voltage state, V1G and V3G are blocking while V2G and V4G are conducting. Since, the terms "upper" and "lower" may imply a certain orientation of the cell, the present disclosure also uses the terms "first" and "second" states.

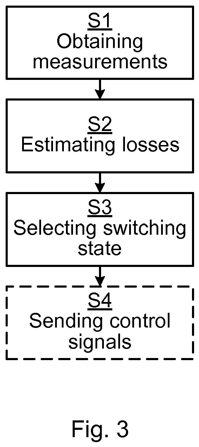

Figure 3 is a schematic flow chart of embodiments of a method of the present invention. The method is for heat balancing in a full-bridge cell 3 and the method is performed in said cell, e.g. by a cell controller 4 therein. It is noted that the method is not related to heat balancing of any other cell in the converter 1 than the cell in which it is performed, nor to heat balancing between different cells.

The method uses measurements on the cell as input and thus comprises obtaining S1 real-time measurements of parameters of the cell 3. In some embodiments, the parameters comprise AC terminal current and/or DC link voltage of the cell 3. However, additionally or alternatively any other parameters of the cell may be measured, e.g. temperatures in the cell. However, temperatures of the switching devices V1-4 are typically not measured since e.g. IGCT:s are not provided with temperature sensors. Also, to estimate the temperatures using a mathematical model, rather than measuring them directly by means of temperature sensors, may exhibit a better dynamic performance and thus be faster.

Based on the obtained S1 measurements, real-time heat losses at each semiconductor switching device V1-4 of the full-bridge are estimated S2 by means of a predetermined mathematical model (herein also called semiconductor loss and thermal model). The mathematical model may comprise or consist of two sub-models, wherein the first one calculates the semiconductor (switching and conduction) losses (typically in Watt) and the second one calculates the junction temperatures from the output of the first sub-model. This mathematical model may be any conventional model for estimating/calculating switching losses and/or conduction losses in the cell, especially switching losses in each respective switching device, resulting in increased temperature (and thus reduced operational capacity) in said switching device.

Based on the estimated losses, one of a first and a second zero output voltage switching states is selected S3 for balancing heat between the switching devices V1-4. This is done e.g. in response to a modulator of the MMC 1 requesting a zero output voltage of the cell 3. As part of the operation of the MMC, e.g. when forming a sinusoidal AC output, each cell 3 may be in zero state at least twice per cycle.

In some embodiments, the selected switching state (first or second zero output voltage switching state) is implemented by sending S4 (e.g. by the cell controller 4) control signals (e.g. firing signals) to any of the switching devices V1-4.

### Example - Semiconductor Loss and Thermal Models

The loss and thermal models of the semiconductor switches V1-4 in the cell 3 calculate switching and conduction losses based on the phase leg current, the switching commands and cell capacitor voltage (DC-link voltage). Then, the temperature drop over the transient thermal impedance is calculated.

Depending on semiconductor temperature drop and current direction, the actual optimal zero voltage switching state (upper or lower) will be sent to a switching state machine (typically also in the cell controller 4).

The implementation may be divided into subsystems such as loss calculation, thermal model and loss balancing.

Inputs are e.g. phase leg current, cell capacitor voltage and IGCT switching signals.

Outputs are e.g. individual semiconductor temperature drops, maximum IGCT temperature drop, maximum diode temperature drop and upper zero voltage switching state selection.

In accordance with the present invention, the real-time estimated S2 semiconductor temperatures are used to determine which of the two possible zero output voltage states is to be selected in case the modulator requests zero output voltage from the cell 3. This selection is implemented in a way which allows to balance the temperatures of the hottest semiconductors within the cell.

The semiconductor losses comprises/consist of conduction losses and switching losses (IGCT: conducting, turn-on, turn-off; diode: conducting, turn-off).

The phase leg current dependent conduction losses may be multiplied by the conduction window of the corresponding semiconductor.

The phase leg current and DC-voltage dependent switching losses may be multiplied by the evaluated switching instant.

Semiconductor conduction losses are estimated as the sum of losses caused by the voltage drop over the conducting semiconductor and ohmic losses. Parameters are given for the certain type of semiconductor, e.g. IGCT or diode.

IGCT switching losses are a function of the current. IGCT switching losses have a linear dependence on the phase current. Coefficients are given for a certain type of semiconductor at a given DC-Link voltage. The same characteristics are taken for switching on (conducting) and off (blocking) but with different parameters.

A proposed sample time is 25 microseconds. For a typical switching energy of 20 Ws, the momentary power will be 800 kW. This has to be taken in account for the calculation resolution because conduction losses are much lower. Diode switching losses is also a function of the current, but have a non-linear dependence on the phase current. Coefficients are given for a certain type of semiconductor at a given DC-Link voltage.

The loss and thermal model estimates the temperature difference between semiconductor and cooling water. Different multiplicative factors are needed to represent the thermal behaviour of the semiconductor. They are different for IGCTs and diodes.

If reverse conducting IGCTs (RC-IGCT) are used, there is a mutual influence between IGCT and diode.

### Example - Computer Program Product

Embodiments of the present invention may be conveniently implemented in the cell 3 (e.g. in the cell controller 4) comprising processor circuitry and executable components, e.g. using one or more conventional general purpose or specialized digital computer, computing device, machine, or microprocessor, including one or more processors, memory and/or computer readable storage media and/or programmable logical device(s), e.g. field-programmable gate array (FPGA), programmed according to the teachings of the present disclosure. Appropriate software coding can readily be prepared by skilled programmers based on the teachings of the present disclosure, as will be apparent to those skilled in the software art.

In some embodiments, the present invention includes a computer program product which is a non-transitory storage medium or computer readable medium (media) having instructions stored thereon/in which can be used to program a computer to perform any of the methods/processes of the present invention. Examples of the storage medium can include, but is not limited to, any type of disk including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data. The computer program product may e.g. be part of the cell controller 4, e.g. a part of the data storage therein, or may be separate from the cell controller and even separate from the cell 3, e.g. a storage medium which may be used to program the cell controller.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A method for heat balancing performed in a full-bridge cell (3) of a phase leg (2) of a Modular Multilevel Converter, MMC, (1), the method comprising:
obtaining (Si) real-time measurements of parameters of the cell (3);
based on the obtained (S1) measurements, by means of a predetermined mathematical model, estimating (S2) real-time heat losses at each
semiconductor switching device (V1-4) of the full-bridge; and **characterized by**,
based on the estimated (S2) losses, selecting (S3) one of a first and a second zero output voltage switching states for balancing heat between the switching devices (V1-4), when a modulator of the MMC (1) requests a zero output voltage of the cell (3).

2. The method of claim 1, further comprising:
sending (S4) control signals to the switching devices (V1-4) for implementing the selected (S3) switching state.

3. The method of claim 1 or 2, wherein the method is performed by a cell controller (4) comprised in the cell (3).

4. The method of any preceding claim, wherein the parameters comprise AC terminal current and DC link voltage of the cell (3).

5. A cell (3) for a phase leg (2) of a Modular Multilevel Converter, MMC, (1), the cell comprising:
four semiconductor switching device (V1-4) in a full-bridge topology of the cell (3); and
a cell controller (4) comprising:
processor circuitry; and
storage storing instructions executable by said processor circuitry whereby said cell controller (4) is operative to:
obtain real-time measurements of parameters of the cell (3);
based on the obtained measurements, by means of a predetermined mathematical model, estimate real-time heat losses at each of the semiconductor switching device (V1-4); and **characterized in that** the instructions are further to cause the cell controller to, based on the estimated losses, select one of a first and a second zero output voltage switching states for balancing heat between the switching devices (V1-4), when a modulator of the MMC (1) requests a zero output voltage of the cell (3).

6. The cell of claim 5, wherein each of the switching devices (V1-4) comprises an Integrated Gate-Commutated Thyristor, IGCT.

7. A phase leg (2) comprising a plurality of series connected cells (3) of claim 5 or 6.

8. An MMC (1) comprising a plurality of phase legs (2) of claim 7.

9. A computer program product comprising instructions to cause the cell (3) of claim 5 or 6 to perform the method of any one of claims 1-4.

## Patentansprüche

1. Verfahren zum Wärmeausgleich, der in einer Vollbrückenzelle (3) eines Phasenzweigs (2) eines modularen mehrstufigen Wandlers, MMC, (1) ausgeführt wird, wobei das Verfahren Folgendes umfasst:
Erhalten (S1) von Echtzeitmessungen von Parametern der Zelle (3); und
Schätzen (S2) mit Hilfe eines vorbestimmten mathematischen Modells von Echtzeitwärmeverlusten in jeder Halbleiterschaltvorrichtung (V1-4) der Vollbrücke basierend auf den erhaltenen (S1) Messungen; **gekennzeichnet durch**
Auswählen (S3) basierend auf den geschätzten (S2) Verlusten entweder eines ersten oder eines zweiten Nullausgangsspannungsschaltzustands zum Ausgleichen der Wärme zwischen der Schaltvorrichtung (V1-4), wenn ein Modulator des MMC (1) eine Nullausgangsspannung der Zelle anfordert (3).

2. Verfahren nach Anspruch 1, das ferner Folgendes umfasst:
Senden (S4) von Steuersignalen zu den Schaltvorrichtungen (V1-4) zum Implementieren des ausgewählten (S3) Schaltzustands.

3. Verfahren nach Anspruch 1 oder 2, wobei das Verfahren durch eine Zellensteuereinheit (4), die in der Zelle (3) enthalten ist, ausgeführt wird.

4. Verfahren nach einem vorhergehenden Anspruch, wobei die Parameter den Klemmenstrom und die Zwischenkreisspannung der Zelle (3) umfassen.

5. Zelle (3) für einen Phasenzweig (2) eines modularen mehrstufigen Wandlers, MMC, (1), wobei die Zelle Folgendes umfasst:
vier Halbleiterschaltvorrichtungen (V1-4) in einer Vollbrückentopologie der Zelle (3); und
eine Zellensteuereinheit (4), die Folgendes umfasst:
eine Prozessorschaltungsanordnung; und
einen Speicher, der Anweisungen speichert, die durch die Prozessorschaltungsanordnung ausführbar sind, wobei die Zellensteuereinheit (4) arbeitet zum:
Erhalten von Echtzeitmessungen von Parametern der Zelle (3);
basierend auf den erhaltenen Messungen Schätzen mit Hilfe eines vorbestimmten mathematischen Modells von Echtzeitwärmeverlusten in jeder der Halbleiterschaltvorrichtungen (V1-4); und **dadurch gekennzeichnet, dass** die Anweisungen ferner zum Veranlassen der Zellensteuereinheit dazu dienen, basierend auf den geschätzten Verlusten entweder einen ersten der einen zweiten Nullausgangsspannungsschaltzustand zum Ausgleichen der Wärme zwischen der Schaltvorrichtung (V1-4) auszuwählen, wenn ein Modulator des MMC (1) eine Nullausgangsspannung der Zelle anfordert (3).

6. Zelle nach Anspruch 5, wobei jede der Schaltvorrichtungen (V1-4) einen integrierten Gatekommutierten Thyristor, IGCT, umfasst.

7. Phasenzweig (2), der mehrere in Reihe verbundene Zellen (3) nach Anspruch 5 oder 6 umfasst.

8. MMC(1), der mehrere Phasenzweige (2) nach Anspruch 7 umfasst.

9. Computerprogrammprodukt, das Anweisungen zum Veranlassen der Zelle (3) nach Anspruch 5 oder 6, das Verfahren nach einem der Ansprüche 1-4 auszuführen, umfasst.

## Revendications

1. Procédé d'équilibrage thermique réalisé dans une cellule à pont complet (3) d'une branche de phase (2) d'un convertisseur multiniveau modulaire, MMC, (1), le procédé comprenant :
l'obtention (S1) de mesures en temps réel de paramètres de la cellule (3) ;
sur la base des mesures obtenues (S1), au moyen d'un modèle mathématique prédéterminé, l'estimation (S2) des pertes de chaleur en temps réel au niveau de chaque dispositif de commutation à semi-conducteur (V1-4) du pont complet ; et **caractérisé par**,
sur la base des pertes estimées (S2), la sélection (S3) d'un des premier et second états de commutation à tension de sortie nulle pour équilibrer la chaleur entre les dispositifs de commutation (V1-4), lorsqu'un modulateur du MMC (1) demande une tension de sortie nulle de la cellule (3).

2. Procédé selon la revendication 1, comprenant en outre :
l'envoi (S4) de signaux de commande aux dispositifs de commutation (V1-4) pour mettre en œuvre l'état de commutation sélectionné (S3).

3. Procédé selon la revendication 1 ou 2, le procédé étant réalisé par un dispositif de commande de cellule (4) compris dans la cellule (3).

4. Procédé selon l'une quelconque des revendications précédentes, les paramètres comprenant le courant alternatif aux bornes et la tension continue de liaison de la cellule (3).

5. Cellule (3) pour une branche de phase (2) d'un convertisseur multiniveau modulaire, MMC, (1), la cellule comprenant :
quatre dispositifs de commutation à semi-conducteur (V1-4) dans une topologie à pont complet de la cellule (3) ; et
un dispositif de commande de cellules (4) comprenant :
un circuit de processeur ; et
des instructions de stockage en mémoire, exécutables par ledit circuit de processeur, ledit dispositif de commande de cellule (4) étant opérationnel pour :
obtenir des mesures en temps réel de paramètres de la cellule (3) ;
sur la base des mesures obtenues, au moyen d'un modèle mathématique prédéterminé, estimer les pertes de chaleur en temps réel au niveau de chacun des dispositifs de commutation à semi-conducteur (V1-4) ; et **caractérisée en ce que** les instructions sont en outre destinées à amener le dispositif de commande de cellule à :
sur la base des pertes estimées, sélectionner un des premier et second états de commutation à tension de sortie nulle pour équilibrer la chaleur entre les dispositifs de commutation (V1-4), lorsqu'un modulateur du MMC (1) demande une tension de sortie nulle de la cellule (3).

6. Cellule selon la revendication 5, chacun des dispositifs de commutation (V1-4) comprenant un thyristor intégré à commutation de grille, IGCT.

7. Branche de phase (2) comprenant une pluralité de cellules (3) connectées en série selon la revendication 5 ou 6.

8. MMC (1) comprenant une pluralité de branches de phase (2) selon la revendication 7.

9. Produit de programme informatique comprenant des instructions pour amener la cellule (3) selon la revendication 5 ou 6 à réaliser le procédé selon l'une quelconque des revendications 1 à 4.
